(19) Europäisches Patentamt
European Patent Office
Office européen des brevets

(11) **EP 1 746 588 A2**

(12) **EUROPEAN PATENT APPLICATION**

(43) Date of publication:
**24.01.2007 Bulletin 2007/04**

(51) Int Cl.:
**G11B 7/13** (2006.01)

(21) Application number: **06117045.2**

(22) Date of filing: **12.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.07.2005 JP 2005203290**

(71) Applicant: **Kabushi Kaisha Toshiba**
**Tokyo 105-8001 (JP)**

(72) Inventors:
• **Higashiyama, Yasushi**
**Tokyo**
**105-8001 (JP)**
• **Aoki, Masahiro**
**Tokyo**
**105-8001 (JP)**

(74) Representative: **Henkel, Feiler & Hänzel**
**Patentanwälte**
**Maximiliansplatz 21**
**80333 München (DE)**

(54) **Light receiving element circuit and optical disk device**

(57)     A light receiving element circuit (1) is an integrated circuit configured by a light receiving element which photoelectrically converts an optical signal having an information signal, and amplifier circuits (U1 to U4) which amplify the photoelectrically converted electric signal and output the signal. The light receiving element circuit (1) comprises a reference voltage generating circuit (39) which generates a reference voltage (Vref) of the amplifier circuits (U1 to U4), a reference voltage output terminal (40) which outputs the reference voltage (Vref), a reference voltage input terminal (41) which inputs a reference voltage from the outside, a (SW1) which switches the reference voltage (Vref) from the reference voltage generating circuit (39) and the reference voltage inputted from the reference voltage input terminal, and a reference voltage switch terminal (42) which controls the switch (SM1).

FIG. 2

EP 1 746 588 A2

**Description**

The present invention relates to an optical disk device which records or reproduces data in or from an optical disk such as a compact disk (CD), a laser disk (LD), a digital versatile disk (DVD), and recently an HD-DVD using a blue laser. In particular, the present invention relates to an optical sensor semiconductor integrated circuit with a built-in amplifier or a light receiving element circuit (hereinafter, collectively referred to as PDIC), which is located in the optical disk device and is used in an optical pickup.

In a disk such as a CD using an infrared laser, a DVD using a red laser, and an HD DVD (High Definition DVD) using a blue laser and recently developed as a recording medium for picture of a high vision class, recording and reproduction of voice and picture information signals are carried out in such a manner that a laser beam is made into a collective spot of a minute size by an objective lens and irradiated to an optical disk, and its reflection light is received and analyzed.

In this way, according to a recent disk unit, three wavelengths are used, and the number of the light receiving cells of a PDIC for photoelectrically converting the reflection light including an information signal from a disk has been increased in proportion to a used wavelength. As a result, a current-voltage converter circuit for a light receiving cell and a peripheral circuit are increased in number, and a power of consumption of the PDIC is also increased. If the power of consumption is increased, its caloric value is also increased, which leads to generation of a temperature drift having a DC component of a signal.

In Japanese Patent No. 3582932, a technology is disclosed, whereby variation of a direct current component of a signal obtained by signal processing can be prevented, an output state can be stabilized, and contortion or the like of the signal can be prevented. An integrated circuit for an optical disk pickup according to this document includes: light receiving means having a plurality of light receiving areas for outputting a current in response to the amount of light received; first reference voltage generating means for outputting a first reference voltage; differential amplification type current-voltage converting means provided corresponding to each light receiving area of the light receiving means, for inputting the current outputted from each light receiving area and inputting the first reference voltage to convert the current into a voltage; and second reference voltage generating means having the same structure as the current-voltage converting means, for outputting a second reference voltage with no voltage inputted, the integrated circuit being mounted on one chip.

In addition to the conventional CD using the infrared laser and the optical disk device for DVD using the red laser, an optical disk device for HD-DVD using the blue laser has been developed in recent years. As high memory density of the optical disk, and further, double-speed memory according to user's needs progress in this way, speed up of a rotational rate of the optical disk is reinforced, and a frequency band of a recording/reproducing signal treated by a pickup unit (a light detecting unit) is about 100 MHz. Therefore, development of a circuit technology for realizing speed-up of signal processing is required.

As described above, in order to correspond to a new format such as an HD-DVD, the PDIC which is a light receiving element is required to correspond to the blue laser in addition to the infrared laser and the red laser. In accordance with increase of the used wavelength, the number of the light receiving cells of the PDIC is increased, and this results in that the number of the current-voltage converter circuits and the number of the peripheral circuits are increased to make the power of consumption of the PDIC larger. If the power of consumption of the PDIC is larger, an output voltage drift which is a DC component of a signal output is increased due to increased temperature of an IC chip. Thus, a focus offset and a tracking offset are increased, and further, a chip size is naturally larger in order to correspond to three wavelengths. As a result, the DC component of the signal output is changed due to temperature drift, and further, there occurs a difference in potential in the DC component between channels. Therefore, a focus offset and a tracking offset are more increased. Further, a vicious cycle such that a firm ware is complicated in order to solve these problems occurs.

In addition, in the above-described Japanese Patent No. 3582932, the second reference voltage generating means for outputting a reference voltage amplifies the reference voltage by an amplifier to merely output it. Accordingly, an RF amplifier at a rear stage inevitably waits for an input terminal for accepting the reference voltage outputted from the PDIC. The IC configuring this RF amplifier at the rear stage has many systems which output the reference voltage but do not input it. There is a serious problem such that the technology disclosed in the Japanese Patent No. 3582932 cannot be applied to an integrated circuit for an optical disk pickup in such a system.

Upon receipt of the output signal of the light receiving cell, the RF amplifier generates a focus error signal and a tracking error signal. A reference for generating the error signal is a reference voltage to be generated inside of the PDIC or by the RF amplifier at the rear stage. All the analog signal calculations of the above-described error signal are carried out based on the reference voltage. Accordingly, when nonlinearity is generated between the reference voltage and the output signal of the light receiving cell in accordance with change of a temperature or the like, an error is observed in the focus error signal and the tracking error signal. This leads to deterioration of the RF signal and deterioration of an error rate of data.

In the case where a reference voltage is generated inside of the PDIC and the RF amplifier inputs the output signal of the PDIC and the reference voltage, there is a large advantage such that the temperature drift of the PDIC can be removed at the side of the RF amplifier. On the contrary, in the case where the RF amplifier outputs a reference voltage and the PDIC inputs the reference voltage, there is an advantage such that the circuit at the side of the PDIC is simple. Which system to choose depends on the judgment of a manufacturer of the device and a system consideration. Accordingly, it is important for a PDIC designing and manufacturing side to correspond to any system.

The present invention has been made taking the foregoing problems into consideration, and an object of which is to provide a light receiving element circuit for an optical disk pickup and an optical disk device, which are economical and can stably read information recorded in an optical disk at a high speed.

In order to achieve the above object, according to one aspect of the present invention, there is provided a light receiving element circuit configured by a light receiving element which photoelectrically converts an optical signal having an information signal and an amplifier circuit which amplifies the photoelectrically converted electric signal and outputs the signal, comprising: a reference voltage generating circuit which generates a reference voltage of the amplifier circuit; a reference voltage output terminal to output the reference voltage to the outside of the light receiving element circuit; a reference voltage input terminal to input a reference voltage from the outside of the light receiving element circuit; a switch which switches the reference voltage generated from the reference voltage generating circuit and the reference voltage inputted from the reference voltage input terminal; and a reference voltage switch terminal to input a signal for controlling the switch.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a schematic diagram showing an exemplary configuration of an information recording and reproducing device (an optical disk device) to which an embodiment of the present invention can be applied;

FIG. 2 is a schematic diagram showing an example of an internal equivalent circuit and a light receiving element pattern of a PDIC for use in an optical head device which is incorporated in the optical disk device shown in FIG. 1;

FIGS. 3A, 3B and 3C are schematic diagrams showing a focusing light receiving state of a laser beam to the PDIC 1;

FIGS. 4A, 4B, and 4C are schematic diagrams showing a tracking light receiving state of a laser beam to the PDIC 1;

FIG. 5 is a block schematic diagram showing an exemplary configuration of a band gap reference circuit as a reference voltage generating circuit;

FIG. 6 is a schematic diagram showing an example of the internal equivalent circuit of the PDIC in which one terminal is shared by input and output of a reference voltage;

FIG. 7 is a schematic diagram showing an example of an internal detailed circuit of a reference voltage switch circuit shown in FIG. 6;

FIG. 8 is a schematic diagram showing an example that a buffer circuit is added to the internal detailed circuit of the reference voltage switch circuit shown in FIG. 7;

FIG. 9 is a schematic diagram showing a SW part modified example of the internal detailed circuit of the reference voltage switch circuit shown in FIG. 8;

FIG. 10 is a schematic diagram showing an embodiment in which the embodiment shown in FIG. 9 of the invention is applied to the PDIC shown in FIG. 2;

FIG. 11 is a schematic diagram showing an example of the internal equivalent circuit of the PDIC, in which one terminal is shared by input and output of a reference voltage and a reference voltage automatic switch circuit is used for switching them;

FIG. 12 is a schematic diagram showing an example of the internal detailed circuit of the reference voltage automatic switch circuit;

FIG. 13 is a schematic diagram showing an example that a buffer circuit is added to the internal detailed circuit of the reference voltage automatic switch circuit shown in FIG. 12;

FIG. 14 is a schematic diagram showing a SW part modified example of the internal detailed circuit of the reference voltage switch circuit shown in FIG. 13;

FIG. 15 is a schematic diagram showing a buffer part modified example of the internal detailed circuit of the reference voltage switch circuit shown in FIG. 13;

FIG. 16 is a schematic diagram showing an embodiment of a current direction detecting circuit 47;

FIG. 17 is a schematic diagram illustrating an aluminum optional system of the PDIC;

FIG. 18 is a schematic diagram showing an embodiment in the case where a PDIC corresponding to three wave lengths is mounted in a PUH; and

FIG. 19 is a schematic diagram showing an example of a hologram to be incorporated in a light path of an optical pickup head 5 shown in FIG. 1 and a pattern of a light receiving element for receiving the light divided by the hologram.

Embodiments of the present invention will be described in detail below with reference to the accompanying drawings below. However, the following description is merely related to an embodiment of the invention, and it does not limit the device and the method of the invention.

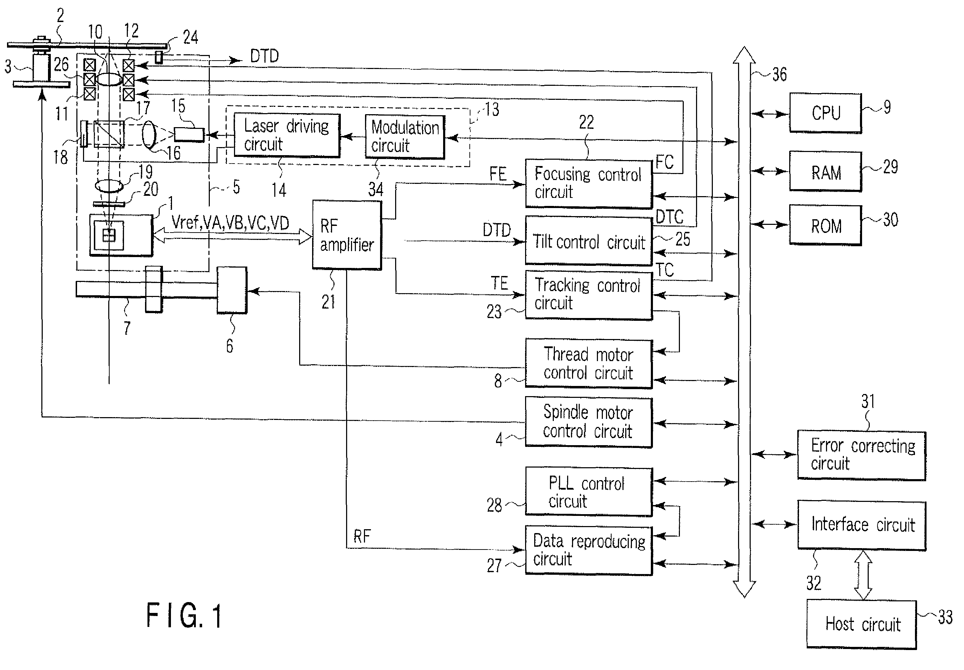

FIG. 1 is a schematic diagram showing a configuration of an optical disk device to which the present invention is applied.

First, the summary of the operation of the device will be explained. An optical disk 2 is an optical disk dedicated to reading, or an optical disk capable of recording user data. The optical disk 2 is rotatably driven by a spindle motor 3. The spindle motor 3 having the optical disk 2 attached thereto controls the number of rotations of the optical disk 2, namely, the number of rotations of the spindle motor 3 by a spindle motor control circuit 4 such that reproduction data can be stably read.

Information is recorded and reproduced in and from the optical disk 2 by an optical pickup head (hereinafter, referred to as PUH) 5. The PUH 5 is connected to a thread motor 6 via a gear 7, and due to rotation of the thread motor 6, the PUH 5 moves in a radial direction of the optical disk 2. The thread motor 6 is controlled by a thread motor control circuit 8.

A seek destination address of the PUH 5 is inputted in the thread motor control circuit 8 from a CPU 9, and the thread motor control circuit 8 controls the thread motor 6 on the basis of the address.

The PUH 5 is provided with an objective lens 10 which is supposed by a wire or a blade spring (not shown). The objective lens 10 can move in a focusing direction (an optical axial direction of a lens) due to driving of a focus driving coil 11, and further can move in a tracking direction (a direction perpendicular to the optical axis of the lens) due to driving of a tracking driving coil 12.

A laser beam is emitted from a semiconductor laser 15 by a laser driving circuit 14 inside of a laser control circuit 13. The laser light emitted from the semiconductor laser 15 is irradiated on the optical disk 2 via a collimator lens 16, a half prism 17, and the objective lens 10. On the other hand, the laser light transmitted through the half prism 17 is converted into an electric signal by an APC-PDIC 18 to be outputted to the laser driving circuit 14. The APC-PDIC 18 is a so-called front monitor. Accordingly, the laser driving circuit 14 monitors the light amount of the laser light to be emitted from the semiconductor laser 15 by the APC-PDIC 18 so as to control the semiconductor laser 15 to always emit the light amount instructed by the CPU 9.

The reflection light from the optical disk 2 is introduced to a PDIC 1 via the objective lens 10, the half prism 17, a collective lens 19, and a cylindrical lens 20.

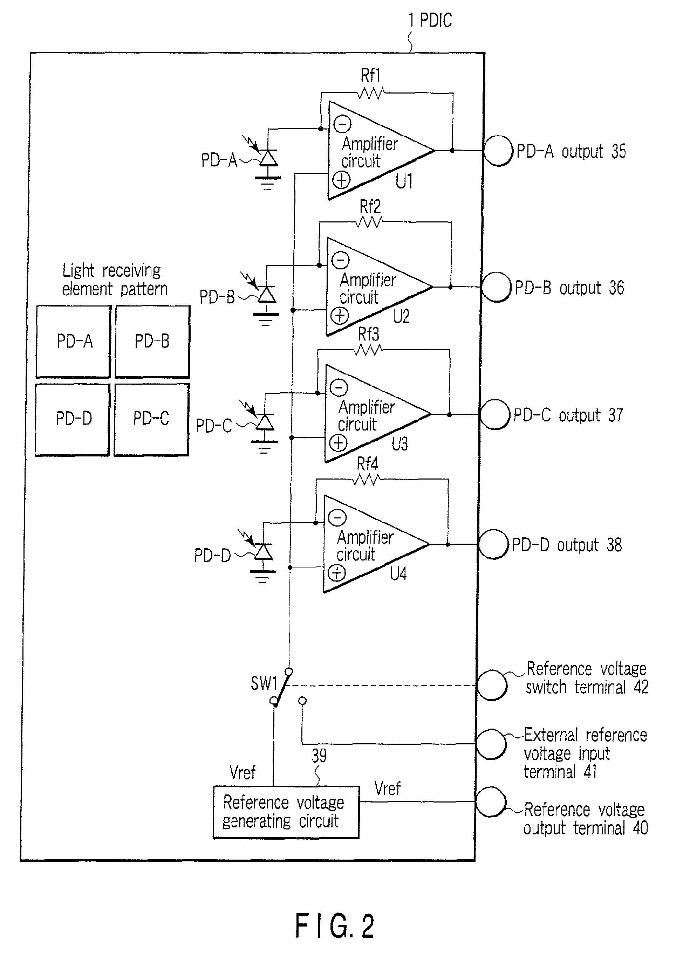

FIG. 2 shows an internal equivalent circuit of the PDIC 1. The left side of the drawing indicates a light receiving pattern of the PDIC. The detail of the circuit will be described later, and the operation of the system will be described first.

The PDIC 1 is composed of, for example, a tetrameric light detecting cell, and a detection signal of each divided respective light detecting cell is outputted to an RF amplifier 21. The RF amplifier 21 synthesizes a signal from the light detecting cell, and outputs a focusing detection signal FE, a tracking detection signal TE, and a fill-added signal RF.

The focusing detection signal FE and the tracking detection signal TE can be calculated as follows assuming that an output of a cell PD-A is VA, an output of a cell PD-B is VB, an output of a cell PD-C is VC, and an output of a cell PD-D is VD.

That is, the focusing detection signal FE is generated from a signal obtained in such a manner that the outputs of the light detecting cell on a diagonal line of the PDIC1 are added respectively, and one value is subtracted from the other value.

$$\text{Focusing detection signal FE} = (VA + VC) - (VB + VD)$$

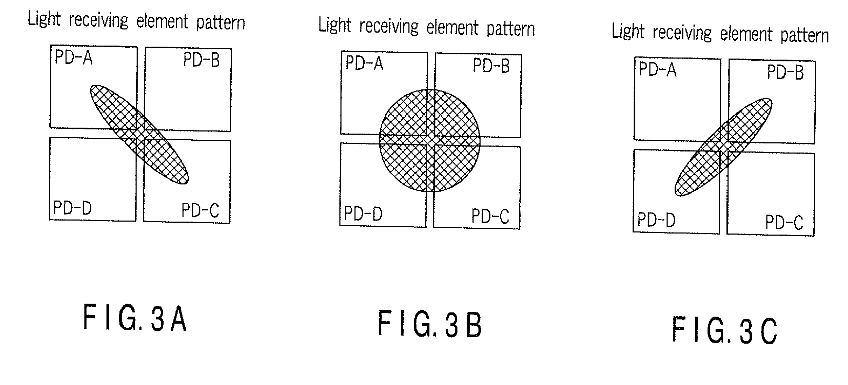

FIG. 3A, FIG. 3B, and FIG. 3C show a focusing light receiving state of a laser beam to the PDIC 1 although the detail is not described here because this is not directly related to a main purpose of the invention. FIG. 3A shows a case where the disk 2 is disposed too near the objective lens 10, FIG. 3C shows a case where the disk 2 is located too far from the objective lens 10, and FIG. 3B shows a just focus state, respectively.

A focusing control circuit 22 generates a focus control signal FC on the basis of the above-described focusing detection signal FE. The focus control signal FC is supplied to the focus driving coil 11 which moves on the objective lens 10 in a focusing direction, and the focus servo is carried out on a recording film of the optical disk 2 such that the laser beam is always in the just focus state.

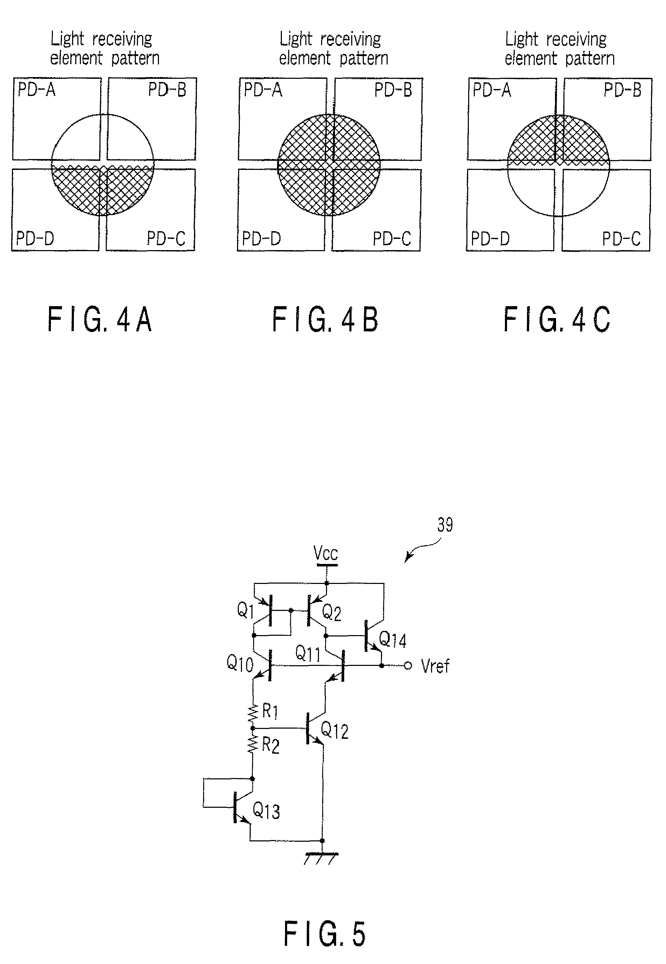

Next, FIGS. 4A, 4B, and 4C show a tracking light receiving state of a laser beam to the PDIC 1 although same as the focusing, the detail is not described here because this is not directly related to a main purpose of the invention. The tracking detection signal TE is generated from a signal obtained in such a manner that the adjacent light detecting cell outputs of the PDIC are added respectively, and one value is subtracted from the other value.

$$\text{Tracking detection signal TE} = (VA + VB) - (VC + VD)$$

This tracking system is generally called as a push-pull system.

FIGS. 4A and 4C each show a case where a laser beam and a track to be reproduced are misaligned to either side, and FIG. 4B shows a case where the laser beam is emitted on the track tracing a center of the track.

A tracking control circuit 23 generates a tracking control signal TC on the basis of the tracking detection signal TE. The tracking control signal TC is supplied to the tracking driving coil 12 which moves on the objective lens 10 in a tracking direction, and the tracking servo is carried out such that the laser light always traces the track formed on the optical disk 2. When the objective lens 10 is controlled by the tracking control circuit 23, the thread motor control circuit 8 controls the position of the thread motor 6, namely, the PUH 5 such that the objective lens 10 is located near a predetermined position in the PUH 5.

A tilt sensor 24 irradiates a light beam for tilt detection to the optical disk 2, receives its reflection light by a position sensing device (PSD), and detects the tilt of the disk 2. A detection output of the tilt sensor 24, namely, a disk tilt detection signal DTD is supplied to a tilt control circuit 25.

The tilt control circuit 25 may generate a disk tilt control signal DTC on the basis of the disk tilt detection signal DTD. The disk tilt control signal DTC is supplied to a tilt driving coil 26, and the tilt of the objective lens is controlled so as to be perpendicular to the disk 2.

By carrying out the focus servo, the tracking servo, and the tilt control, change of the reflection light from a pit formed on the track of the optical disk 2 is reflected on a signal of "VA + VB + VC + VD" obtained by adding the outputs of four light receiving cells of the PDIC 1, namely, the added signal RF. The RF signal is supplied to a data reproducing circuit 27. The data reproducing circuit 27 decodes information by signal processing such as a PRML system on the basis of a reproduction clock signal from a PLL control circuit 28.

The decoded information signal is supplied to a RAM 29 via a bus 36 under the command of the CPU 9, and the error thereof is corrected by an error correcting circuit 31 using the RAM 29. Then, the information signal is sent to a host circuit 33 outside of the optical disk device (hereinafter, referred to as a drive) from an interface circuit 32 via a general ATAPI interface.

The spindle motor control circuit 4, the thread motor control circuit 8, the laser control circuit 13, the PLL control circuit 28, the data reproducing circuit 27, the focusing control circuit 22, the tracking control circuit 23, the error correcting circuit 31, the RAM 29, and the ROM 30 are controlled by the CPU 9 via the bus 36. The CPU 9 controls the recording and reproducing device in a comprehensive manner in accordance with an operation command to be provided from the host circuit 33 via the interface circuit 32. In addition, the CPU 9 uses the RAM 29 as a work area to carry out a predetermined operation in accordance with a program recorded in the ROM 30.

The reproduction of the information signal recorded in the optical disk 2 has been described so far, and recording of the information signal will be briefly described below.

An information signal to be sent from the host circuit 33 outside of the drive in an ATAPI interface system is sent to the bus 36 via the interface circuit 32. Then, using the error correcting circuit 31 and the RAM 29, an error correction signal and additional information such as header information are added to the information signal to generate a recording signal. The recording signal is, for example, 8-16 modulated by a modulation circuit 34 inside the laser control circuit 13, and the modulated signal is outputted as a light having the intensity modulated from the semiconductor laser 15 by the laser driving circuit 14. The optically-outputted recording signal is irradiated on the optical disk 2 via the collimator lens 16, the half prism 17, and the objective lens 10, and the recording signal according to the light intensity is recorded. The recorded signal is reproduced as described above.

FIG. 2 is an internal equivalent circuit of the PDIC 1, which is mounted on the PUH 5.

In FIG. 2, reference numeral 1 denotes a PDIC. As illustrated in FIGS. 3 and 4, photo detectors PD-A to PD-D receive a reflection light including an information signal from the optical disk 2 and photoelectrically convert the reflection light. The photo detectors PD-A to PD-D generate a current changing in accordance with the information signal. This current is converted from the current into the voltage to be outputted to output terminals 35 to 38. As amplifier circuits U1 to U4, a current-voltage converter circuit (hereinafter, referred to as IV converter circuit) is usually used. In general, the IV converter circuit is composed in such a manner that feedback resistances Rf1 to Rf4 are inserted between inverting input terminals (- input terminals) of an OP amplifier circuit and outputs as shown in FIG. 2. In the drawing, a power source line is omitted.

In the PDIC 1 of FIG. 2, reference voltages Vref of the amplifier circuits U1 to U4 can be supplied from two lines, namely, interior and exterior lines.

In the case of supplying a reference voltage from the inside, a reference voltage generated by an internal reference voltage generating circuit 39 is supplied to the amplifier circuits U1 to U4 via an electron switch (a SW1, hereinafter a switch is referred to as SWn; n is a number). In the case of using an internal reference voltage, the reference voltage is transmitted to an RF amplifier at the rear stage from a reference voltage output terminal 40. The circuit configuration of the signal input stage of the RF amplifier is not illustrated, but this circuit is configured in the same manner as the circuit using a plurality of operation amplifiers shown in FIG. 2. More specifically, a light detection signal is supplied to the inverting input terminal of each operation amplifier from the PDIC 1, and the reference voltage is supplied to the non-inverting input terminal.

As the reference voltage generating circuit 39, a band gap reference circuit capable of obtaining a reference voltage with a high accuracy can be used. FIG. 5 shows a configuration of the band gap reference circuit. The operation of the band gap reference circuit will be briefly described below.

When a current flows through a transistor Q1, an equivalent current also flows through a transistor Q2 which configures a current mirror circuit together with the transistor Q1. A part of the current flowing through the transistor Q2 is made into a base current of a transistor Q14, and the transistor Q14 is turned on. Then, when the transistor Q14 is turned on, transistors Q10 and Q11 are turned on. Consequently, the current flowing though the transistor Q1 passes through the transistor Q10, and resistors R1 and R2, and further, it passes through a GND via a transistor Q13 being in a diode state.

Here, a potential at a connection point between the resistances R1 and R2, namely, a base potential of the transistor Q12 takes a value obtained by adding a potential drop in the resistance R2 to the potential difference between a base and an emitter of the transistor Q13, so that the transistor Q12 is also turned on. As a consequence, the current flowing through the transistor Q2 also flows through the GND.

In the above-described state, a value of an output voltage Vout is taken by adding the potential drop in the resistances R1 and R2 to the potential difference between the base and the emitter of the transistor Q10 and the transistor Q13, respectively. In general, a potential difference between the base and the emitter of a transistor has a negative temperature coefficient, and the volume of the voltage drop by the resistance has a positive temperature coefficient. Accordingly, if the resistance values of the resistances R1 and R2 are appropriately selected with respect to the transistors Q10 and Q13 formed by, for example, silicon, it is possible to counteract the negative temperature coefficient and the positive temperature coefficient with each other. The band gap reference circuit shown in FIG. 5 makes a temperature dependence property of the output voltage Vout small as much as possible, thereby providing a stable constant voltage with respect to a temperature.

The reference voltage generating circuit using the band gap reference has been described as above. It is a matter easily known by a person skilled in the art that the same function and performance can be obtained by another circuit system including a current mirror circuit in consideration of the circuit configuration, the power of consumption, and the other specifications.

In the case where a reference voltage is inputted in the PDIC 1 from the outside, a reference voltage from the outside is inputted in an external reference voltage input terminal 41, the reference voltage is supplied to the amplifier circuits U1 to U4 via the SW1. The SW1 is controlled in such a manner that a control signal for controlling the SW1 to be the external input or the internal input is inputted in a reference voltage switch terminal 42.

According to the embodiment of the PDIC shown in FIG. 2, one PDIC can correspond to two kinds of reference voltages, namely, the internal one and the external one. In this embodiment, however, there is a disadvantage such that many terminals are required since different terminals have to be used respectively when the external reference voltage is inputted and the internal external reference voltage is outputted. Increase of the number of terminals means that the package size of the PDIC is made larger. This is disadvantageous when the PDIC is applied to a so-called slim type of drive such as a lap top computer.

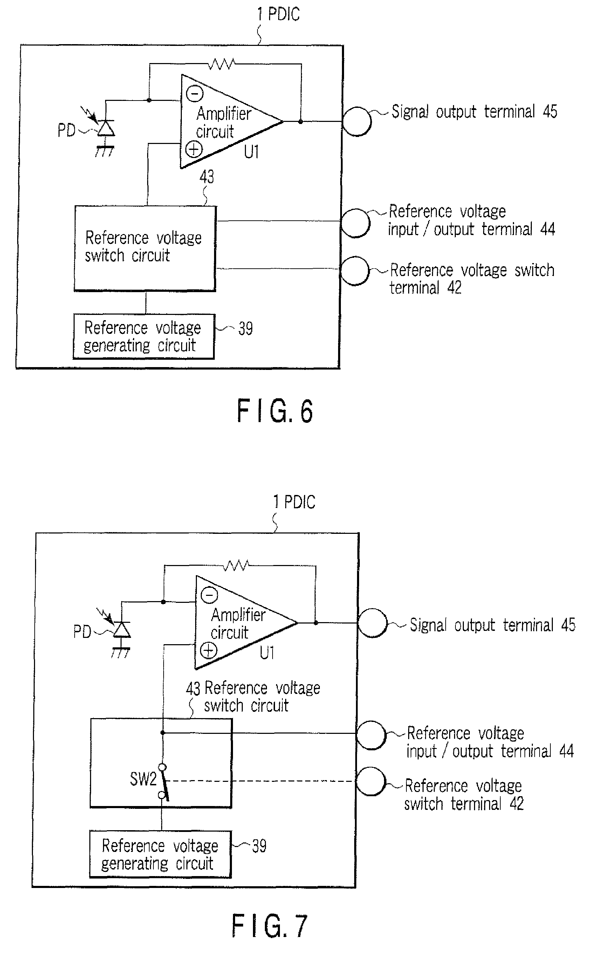

In FIG. 6, this disadvantage is solved in such a manner that one terminal is used for both input and output of the reference voltage. In FIG. 6, in order to make the explanation simple and to facilitate understanding, it is assumed that a PD has one channel. In addition, the same elements as those shown in FIGS. 1 and 2 are given the same reference numerals.

According to the PDIC 1 of this embodiment, a reference voltage can be supplied to the amplifier circuit U1 from two lines, i.e., the internal line and the external line by one terminal 44.

A reference voltage switch circuit 43 controls input and output of internal and external reference voltages on the basis of a control signal to be inputted in the reference voltage switch terminal 42. In the case of using the internal reference voltage, a control signal is sent to the reference voltage switch terminal 42 to switch input and output of the reference voltage into the internal reference voltage side, so that the reference voltage switch circuit 43 is set as the internal reference voltage circuit. One of the reference voltage outputs of the reference voltage generating circuit 39 is sent to the amplifier circuit U1 by the reference voltage switch circuit 43, and the other is sent to the reference voltage input terminal of the RF amplifier (not shown) at the rear stage of the PDIC by way of the reference voltage input/output terminal 44.

When using the reference voltage from the outside, the reference voltage from the outside is inputted in the reference voltage input/output terminal 44 to be sent to the amplifier circuit U1 by the reference voltage switch circuit 43.

It is general that the signal condition of the PDIC output is controlled by the RF amplifier (not shown) at the rear stage, so that in many cases, the reference voltage output of the RF amplifier is inputted in the PDIC 1. Thus, according to the present embodiment, one terminal can be used for both input and output of the reference voltage.

The internal circuit of the reference voltage switch circuit 43 will be described in detail with reference to the following FIGS. 7, 8 and 9.

In FIG. 7, SW2 is provided between an output of the reference voltage generating circuit 39 and the amplifier circuit U1 as a load, and the reference voltage input/output terminal 44 is connected to the side of the amplifier circuit U1. A control signal for switching input and output of the reference voltage is inputted in the reference voltage switch terminal 42 so as to control the SW2.

In the case of using the reference voltage generating circuit 39 located inside, a control signal for turning on the SW2 is inputted in the reference voltage switch terminal 42. As a result, the output of the reference voltage generating circuit 39 is outputted to the amplifier circuit U1 and the reference voltage input/output terminal 44 by way of the SW2. The reference voltage outputted from the reference voltage input/output terminal 44 is sent to the reference voltage input terminal of the RF amplifier (not shown) at the rear stage together with the light detection signal to be outputted from the signal output terminal.

In the case of using the external input reference voltage, a control signal for turning OFF the SW2 is inputted in the reference voltage switch terminal 42. As a result, the reference voltage from the RF amplifier is inputted via the reference voltage input/output terminal 44, and the reference voltage is supplied to the amplifier circuit U1.

The RF amplifier receives an output signal of the PDIC, generates a focus signal and a tracking signal on the basis of the signal from the PDIC. Further, the RF amplifier carries out processing such as equivalence of an RF signal reproduced from a disk, and sends these signals to a DSP at the rear stage as a focus error signal, a tracking error signal, and an information signal before binarization. The RF amplifier amplifies a signal on the basis of the reference voltage or performs addition and subtraction for generating the above-described focus error signal and tracking error signal. The DSP at the rear stage operates an actuator and a PUH feeding system circuit on the basis of the focus error signal and tracking error signal which are generated and transmitted by the RF amplifier so as to cause them to perform the servo operation. On the other hand, the information signal before binarization is binarized by the DSP to be decoded into a signal such as a header, an address, and data. Then, the data is sent to a personal computer or the like (not shown) via an interface such as an ATAPI.

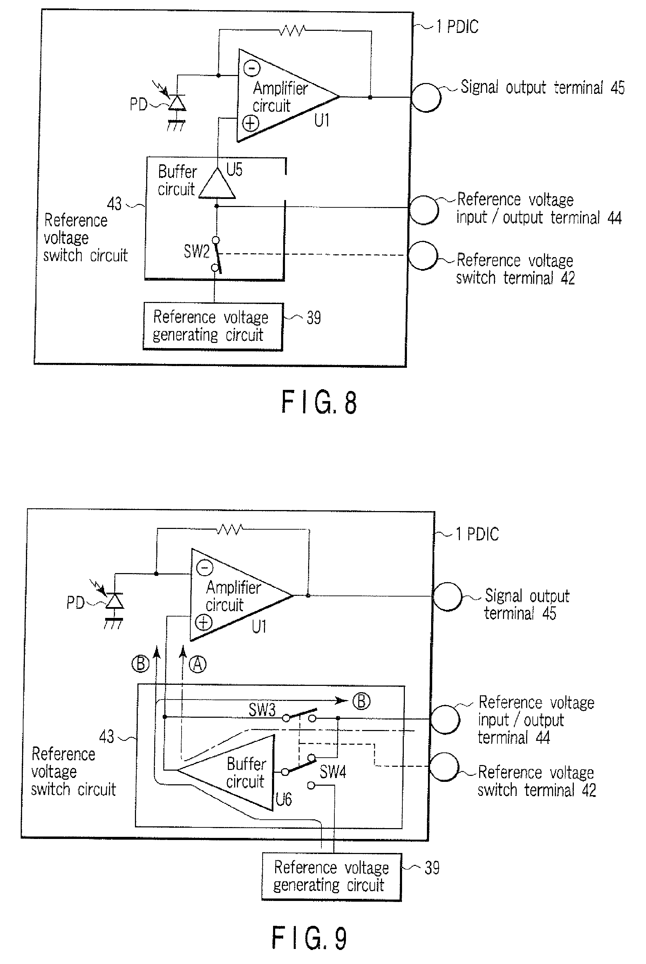

Next, an embodiment shown in FIG. 8 will be described. FIG. 8 is different from FIG. 7 in that a buffer circuit U5 is added. In the case where there are not many cells and there are few amplifier circuits U1 as a load, the circuit shown in FIG. 7 is available. However, in the case where there are many cells and many amplifier circuits, a load is heavy, and the stable supply of the reference voltage may be difficult. The circuit shown in FIG. 8 serves to buffer the reference voltage for the stable supply of the reference voltage, and improves a disadvantage of the circuit shown in FIG. 7.

Next, an embodiment shown in FIG. 9 will be described. In the embodiment shown in FIG. 8, the buffer circuit U5 effectively functions to the internal amplifier circuit such as U1, but in the case of transmitting the internal reference voltage to the RF amplifier (not shown) at the rear stage, the driving performance may run short depending on its load state. The embodiment shown in FIG. 9 solves this problem. FIG. 9 is different from FIG. 8 in the circuit arrangement of a buffer circuit U6. Using SW3 and SW4, the buffer circuit U6 effectively functions in both cases where the reference voltage is supplied from the inside and where the reference voltage is supplied from the outside. As a result, the reference voltage can be stably supplied.

The embodiment shown in FIG. 9 will be described in detail. Also in FIG. 9, it is assumed that the PD has one channel in order to simplify the explanation and facilitate understanding.

In this embodiment as well, a reference voltage can be supplied to the amplifier circuit U1 from two lines, i.e., the internal line and the external line by one terminal in the PDIC 1. The reference voltage switch circuit 43 controls input and output of the internal and external reference voltages by a control signal to be inputted in the reference voltage switch terminal 42. More specifically, the reference voltage switch circuit 43 controls them in conjunction with the SW3 and the SW4.

When using the internal reference voltage, the reference voltage is transmitted through a route represented by B in the drawing. A control signal to switch the reference voltage into the internal reference voltage side is sent to the reference voltage switch terminal 42, and the reference voltage switch circuit 43 is set as the internal reference voltage circuit. In other words, the SW4 is switched into the side of the reference voltage generating circuit 39, and the SW3 is turned ON. The reference voltage output of the reference voltage generating circuit 39 is buffered by the buffer circuit U6 via the SW4 to be sent to the amplifier circuit U1, further, to be sent to the reference voltage input terminal of the RF amplifier (not shown) at the rear stage of the PDIC from the reference voltage input/output terminal 44 via the SW3.

In the case of using the reference voltage from the outside, the reference voltage is transmitted through a route A shown in the drawing. A control signal to switch the reference voltage into the external reference voltage side is sent to the reference voltage switch terminal 42, and the reference voltage switch circuit 43 is set as the external reference voltage circuit. In other words, the SW4 is switched into the side of the reference voltage input/output terminal 44, and the SW3 is turned off. The reference voltage from the outside of the RF amplifier or the like is inputted in the reference voltage input/output terminal 44, and is buffered by the buffer circuit U6 via the SW4 to be sent to the amplifier circuit U1.

Thus, also in the embodiment shown in FIG. 9, one terminal can be used for both input and output of the reference voltage. Further, in both cases where the reference voltage is supplied from the inside and where the reference voltage is supplied from the outside, the buffer circuit effectively functions, and as a result, the stable supply of the reference voltage becomes possible.

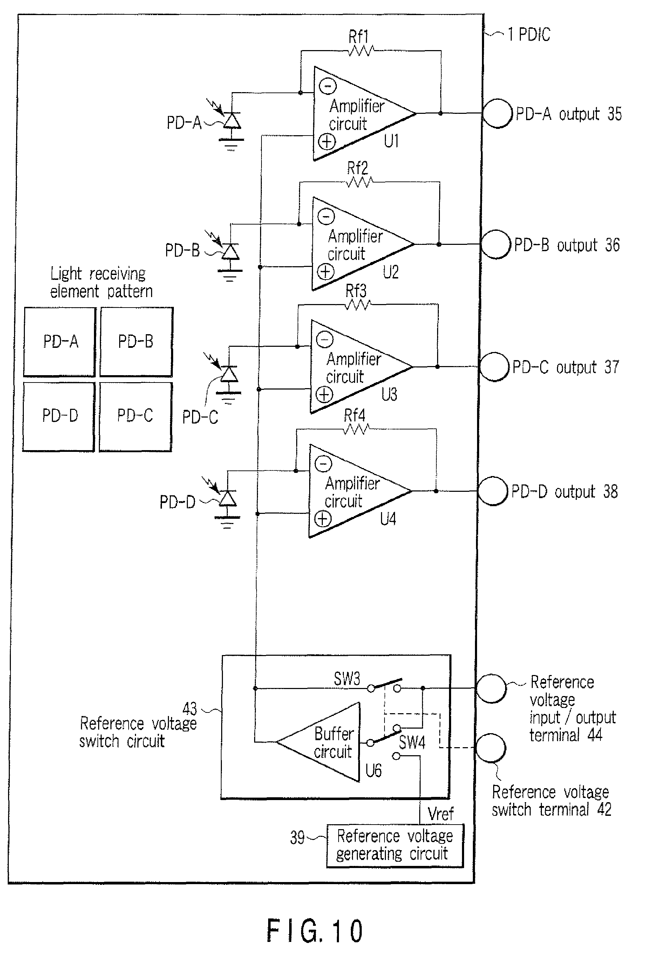

FIG. 10 illustrates an embodiment in which the embodiment shown in FIG. 9 of the invention is applied to an actual PDIC.

At the left side of FIG. 10, a light receiving element pattern is shown. This is the same PD pattern as in FIG. 1. In addition, the circuit at the right side of FIG. 10 is a simplified block diagram inside of the PDIC. As described above, when there are many light receiving cells, and further, when the PDIC is far from the RF amplifier, the buffer circuit U6 functions very effectively in both cases where the reference voltage is internally supplied and where it is externally supplied.

According to the embodiment of the PDIC shown from FIGS. 6 to 10, there is a disadvantage such that the control terminal is required for switching two kinds of the reference voltages, namely, the internal one and the external one. The package size of the PDIC is made larger for the amount of the control terminal, the control signal is required for switching the reference voltage from the outside, which involves a problem such that the design of a substrate becomes difficult.

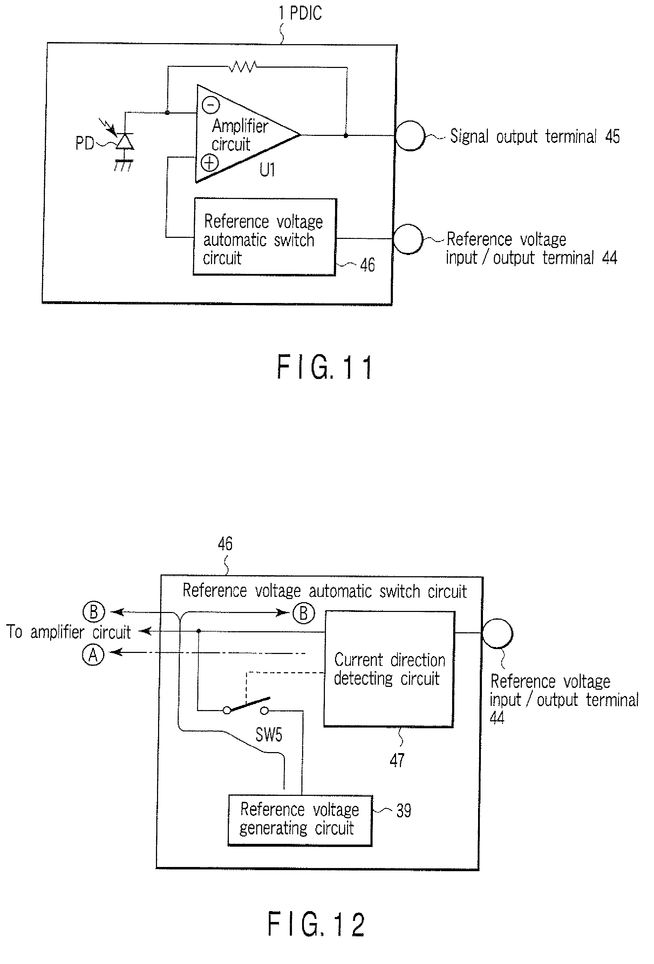

The embodiment shown in FIG. 11 solves this disadvantage. The present embodiment uses a reference voltage automatic switch circuit 46 and automatically detects the case where the reference voltage is inputted in the reference voltage input/output terminal 44 and the case where the reference voltage is not inputted therein so as to automatically switch input and output of the reference voltage. FIG. 11 illustrates the outline of the operation of the reference voltage automatic switch circuit 46, and FIGS. 12, 13, 14 and 15 illustrate the detail of the reference voltage automatic switch circuit. Also in FIG. 11, it is assumed that the PD has only one channel in order to simplify the explanation and facilitate understanding. In addition, the same elements as those shown in FIGS. 1 and 2 are given the same reference numerals.

In the PDIC 1 according to the embodiment shown in FIG. 11, a reference voltage can be supplied to the amplifier circuit U1 from two lines, i.e., the internal line and the external line by one terminal 44. The present embodiment is different from the embodiments illustrated from FIGS. 1 to 10 in that there is no reference voltage switch terminal to control switching of input and output of the reference voltage. The reference voltage automatic switch circuit 46 controls input and output of the internal and external reference voltages depending on presence/absence of the reference voltage to the reference voltage input/output terminal.

Next, with reference to FIGS. 12, 13, 14 and 15, the detail of the reference voltage automatic switch circuit will be described below.

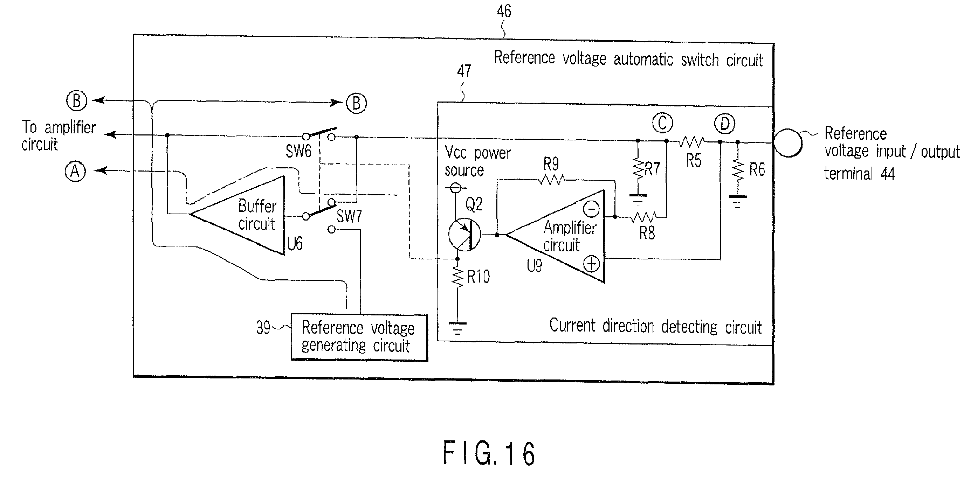

FIG. 12 is an internal circuit of the reference voltage automatic switch circuit 46. The present embodiment is characterized by a current direction detecting circuit 47. The current direction detecting circuit 47 detects presence/absence of the reference voltage, and controls input and output of the internal and external reference voltages. The details of the current direction detecting circuit 47 will be illustrated in FIG. 16. Specifically, a direction of a current is detected.

First, the case of using the reference voltage generating circuit 39 will be described below.

The reference voltage input/output terminal 44 and the reference voltage input terminal of the RF amplifier (not shown) at the rear stage of the PDIC are connected each other. At the initial setting just after the power source is turned ON, the SW5 is turned OFF. If the external reference voltage is not supplied to the reference voltage input/output terminal 44, no current flows since the SW5 is turned OFF, and no reference voltage is inputted in the current direction detecting circuit 47. More specifically, it is determined that the circuit is set to use the interior reference voltage, and the SW5 is turned ON. If the SW5 is turned ON, the reference voltage generated by the reference voltage generating circuit 39 is transmitted to an amplifier circuit (not shown) via the SW5 as represented by B in the drawing. Further, the reference voltage is supplied to the reference voltage input terminal of the RF amplifier at the rear stage of the PDIC from the reference voltage input/output terminal 44 by way of the current direction detecting circuit 47.

Next, the case where the reference voltage generating circuit 39 is not used will be described below.

As described above, the SW5 is turned OFF at the initial setting just after the power source is turned ON. Accordingly, the reference voltage of the internal reference voltage generating circuit 39 is not outputted. If the external reference voltage is supplied from the reference voltage output terminal of the RF amplifier to the reference voltage input/output terminal 44, the current direction detecting circuit 47 detects the current generated by the external reference voltage from the RF amplifier, determines that the circuit is set to use the exterior reference voltage, and leaves the SW5 turned OFF. As a result, the external reference voltage from the reference voltage output terminal of the RF amplifier at the rear stage of the PDIC is sent to the amplifier circuits U1 by way of the reference voltage input/output terminal 44 and the current direction detecting circuit 47.

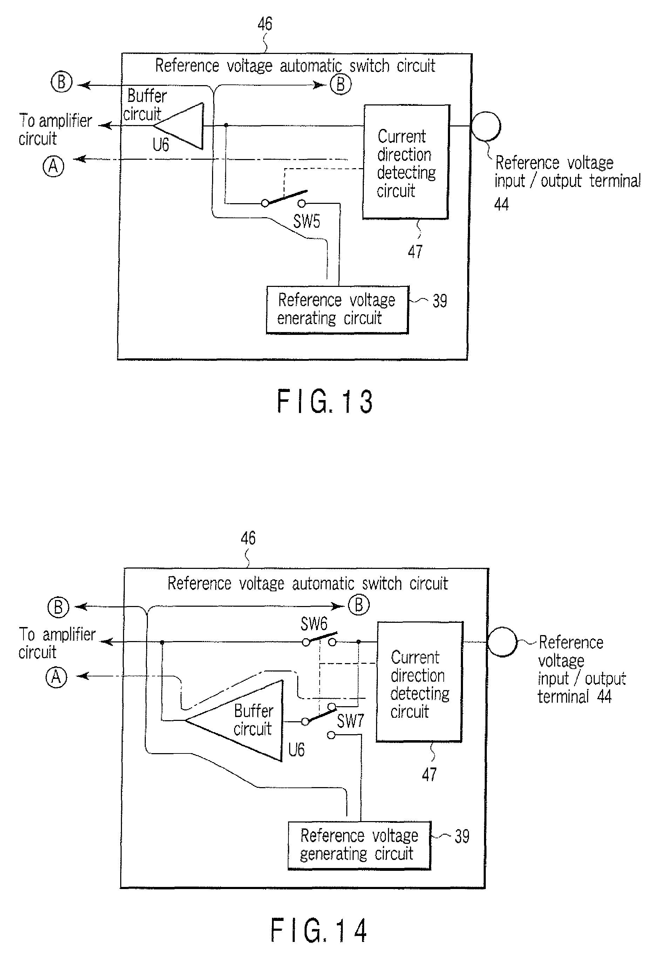

Next, an embodiment shown in FIG. 13 will be described below. FIG. 13 is different from FIG. 12 in that a buffer circuit U6 is provided. In the case where there are not many light detecting cells and there are not many amplifier circuits (not shown) which are loads against the reference voltage, the circuit shown in FIG. 12 may be available. However, in the case where there are many cells and there are many amplifier circuits, the load is heavy, so that it may become difficult to stably supply the reference voltage. In the circuit shown in FIG. 13, the reference potential is buffered in order to stably supply the reference voltage so as to improve the disadvantage of the circuit shown in FIG. 12.

Next, an embodiment shown in FIG. 14 will be described below. According to the embodiment shown in FIG. 13, the buffer circuit effectively functions to the interior amplifier circuit. However, in the case of transmitting the internal reference voltage to the RF amplifier circuit at the rear stage, there is a possibility that the driving capacity runs short depending on its load state. In the embodiment shown in FIG. 14, this problem is solved.

FIG. 14 is different from FIG. 13 in the circuit arrangement of the buffer circuit U6. Using the SW6 and SW7, the buffer circuit U6 effectively functions in both cases where the reference voltage is supplied from the inside and where the reference voltage is supplied from the outside. As a result, the reference voltage can be stably supplied.

The embodiment shown in FIG. 14 will be described in detail. The current direction detecting circuit 47 controls input and output of the internal and external reference voltages. Specifically, the current direction detecting circuit 47 controls input and output of the reference voltages by switching the SW6 and the SW7.

First, the case of using the internal reference voltage will be described.

The reference voltage input/output terminal 44 and the reference voltage input terminal of the RF amplifier at the rear stage of the PDIC are connected each other. At the initial setting just after the power source is turned ON, the current direction detecting circuit 47 is set as the internal reference voltage circuit, namely, the SW7 is switched to the side of the current direction detecting circuit 47, and the SW6 is turned OFF. If no external reference voltage is supplied to the reference voltage input/output terminal 44, no current flows since the SW6 is turned OFF, so that no reference voltage is inputted in the current direction detecting circuit 47. In other words, it is determined that the circuit is set to use the interior reference voltage.

The current direction detecting circuit 47 is set as the internal reference voltage circuit, in other words, the SW7 is switched to the side of the reference voltage generating circuit 39, and the SW6 is turned ON. The reference voltage generated by the interior reference voltage generating circuit 39 is buffered by the buffer circuit U6 and is sent to an amplifier circuit (not shown) via the SW7 as represented by B in FIG. 14. Further, the reference voltage is sent to the reference voltage input terminal of the RF amplifier at the rear stage of the PDIC from the reference voltage input/output terminal 44 by way of the SW6 and the current direction detecting circuit 47.

Next, the case that the reference voltage supplied from the outside is used will be described below.

At the initial setting just after the power source is turned ON, the current direction detecting circuit 47 is set as the internal reference voltage circuit, in other words, the SW7 is switched to the side of the current direction detecting circuit 47, and the SW6 is turned OFF. The reference voltage input/output terminal 44 is connected to the reference voltage output terminal of the RF amplifier at the rear stage of the PDIC.

If the external reference voltage is supplied from the reference voltage output terminal of the RF amplifier to the reference voltage input/output terminal 44, the current direction detecting circuit 47 detects the current generated by the external reference voltage from the RF amplifier, determines that the circuit is set to use the exterior reference voltage, and leaves the SW6 turned OFF. As a result, as shown in A of FIG. 14, the exterior reference voltage from the reference voltage output terminal of the RF amplifier at the rear stage of the PDIC is buffered by the buffer circuit U6 and is sent to the amplifier circuits U1 via the reference voltage input/output terminal 44, the current direction detecting circuit 47, and the SW7 as represented by A in FIG. 14.

Thus, also in the embodiment shown in FIG. 14, one terminal can be used for both input and output of the reference voltage. Further, in both cases where the reference voltage is supplied from the inside and where the reference voltage is supplied from the outside, the buffer circuit effectively functions, and as a result, the stable supply of the reference voltage is possible.

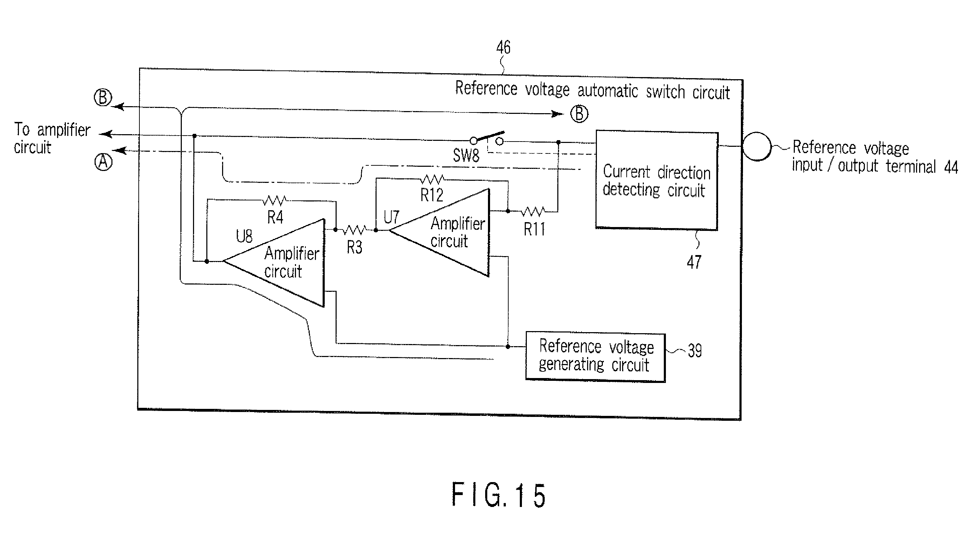

FIGS. 12 to 14 show the embodiments using the buffer circuit for improving a driving power of the reference current, and FIG. 15 illustrates the embodiment regarding other circuits.

According to the embodiment shown in FIG. 15, the SW7 of the embodiment shown in FIG. 14 is reduced, and in place of the buffer, an amplifier circuit is used. In the case of this embodiment, total gain of amplifier circuits U7 and U8 may be 1. When there is a difference between the external reference voltage and the internal reference voltage, total gain of the amplifier circuits U7 and U8 may be 1 or more in the case where the external reference voltage drops due to a transmission-path loss. The current direction detecting circuit 47 controls input and output of the internal and external reference voltages. Specifically, the current direction detecting circuit 47 switches the SW8.

First, the case of using the internal reference voltage will be described.

The reference voltage input/output terminal 44 and the reference voltage input terminal of the RF amplifier at the rear stage of the PDIC are connected each other. At the initial setting just after the power source is turned ON, the current direction detecting circuit 47 is set as the internal reference voltage circuit, namely, the SW8 is turned OFF. If the external reference voltage is not supplied to the reference voltage input/output terminal 44, no current flows since the SM8 is turned OFF, so that the reference voltage is not inputted in the current direction detecting circuit 47. In other words, it is determined that the circuit is set to use the interior reference voltage.

The current direction detecting circuit 47 is set as the internal reference voltage circuit, in other words, the SW8 is turned ON. The reference voltage generated by the interior reference voltage generating circuit 39 is buffered by the amplifier circuits U7 and U8 and is sent to an amplifier circuit (not shown) of the PD as represented by B in FIG. 15. Further, the reference voltage is supplied to the reference voltage input terminal of the RF amplifier at the rear stage of the PDIC from the reference voltage input/output terminal 44 by way of the SW8 and the current direction detecting circuit 47.

As being obvious from the circuit, if the SW8 is turned ON, the amplifier circuits U7 and U8 are made into voltage followers, amplify the reference voltage output of the interior reference voltage generating circuit 39 as a gain 1, and output it.

Next, the case of using the external reference voltage will be described below.

The reference voltage input/output terminal 44 and the reference voltage input terminal of the RF amplifier at the rear stage of the PDIC are connected each other. At the initial setting just after the power source is turned ON, the current direction detecting circuit 47 is set as the internal reference voltage circuit, namely, the SW8 is turned OFF. If the external reference voltage is supplied to the reference voltage input/output terminal 44 from the reference voltage input terminal of the RF amplifier, the current direction detecting circuit 47 detects a current generated by the external reference voltage from the RF amplifier, determines that the circuit is set to use the external reference voltage, and leaves the SW8 turned OFF. As a result, as shown by A of FIG. 15, the exterior reference voltage from the reference voltage output terminal of the RF amplifier at the rear stage of the PDIC is buffered by the amplifier circuits U7 and U8 and is sent to the amplifier circuit of the PD (not shown) by way of the reference voltage input/output terminal 44 and the current direction detecting circuit 47.

As being obvious from the circuit, if the SM8 is turned OFF, the amplifier circuits U7 and U8 are made into a two-stage amplifier which operates as the reference voltage of the interior reference voltage generating circuit 39. If there is no loss, in principle, the same voltage as the external reference voltage is outputted from the U8. Further, if the amplifiers U7 and U8 are used as the two-stage amplifier, offset generated from the amplifiers U7 and U8 themselves may be cancelled.

Thus, also in the embodiment shown in FIG. 15, one terminal can be used for both input and output of the reference voltage. Further, in both cases where the reference voltage is supplied from the inside and where the reference voltage is supplied from the outside, the buffer circuit effectively functions, and as a result, the stable supply of the reference voltage is possible.

Next, the embodiment of the current direction detecting circuit used in the embodiments shown in FIGS. 12 to 15 will be described below.

FIG. 16 shows an embodiment of the current direction detecting circuit 47. It is not easy to understand the operational relation with the peripheral circuit only from the current direction detecting circuit 47, and therefore, the current direction detecting circuit 47 is illustrated in the reference voltage automatic switch circuit 46 which is a hierarchy circuit at a next level. Accordingly, the SW6, the SW7, the U6, and the circuit block diagram of the reference voltage generating circuit 39 located at the left side from the Q1 are the same as the circuit shown in FIG. 14.

In the drawing, R6 and R7 are bleeder resistances, and they can be also used as partial pressure resistances with R5.

As the operation of the current direction detecting circuit 47, only two cases are considered, namely, the case where the external reference voltage is inputted from the reference voltage input/output terminal 44 and the case where the external reference voltage is not inputted from the reference voltage input/output terminal 44. The current direction detecting circuit 47 detects whether or not the external reference voltage is inputted in the reference voltage input/output terminal 44 with the SW6 turned OFF.

First, the case of using the reference voltage from the outside will be described.

The reference voltage input/output terminal 44 and the reference voltage input terminal of the RF amplifier (not shown) at the rear stage of the PDIC are connected each other. At the initial setting just after the power source is turned ON, the SW6 is turned OFF, and the SW7 is switched to the side of the reference voltage input/output terminal 44. If the external reference voltage is supplied to the reference voltage input/output terminal 44 from the reference voltage output terminal of the RF amplifier, the potential at point C is lower than the potential at point D due to a partial pressure ratio between the R5 and the R7. Further, the output of an amplifier circuit U9 is High, and the base potential of the transistor Q1 is high. Therefore, the collector potential of the transistor Q1 is Low. That is, the current direction detecting circuit 47 determines that the circuit is set to use the exterior reference voltage, and leaves the SW6 turned OFF and switches the SW7 to the side of the reference voltage input/output terminal 44.

As a consequence, as shown by A of FIG. 16, the exterior reference voltage from the reference voltage output terminal of the RF amplifier at the rear stage of the PDIC is buffered by the buffer circuit U6 and is supplied to the amplifier circuit (not shown) of the PD via the reference voltage input/output terminal 44, the resistance R5, and the SW7.

Next, explanation will be given to the case where the external reference voltage is not inputted from the reference voltage input/output terminal 44, namely, the case where the internal reference voltage is used.

At the initial setting just after the power source is turned ON, the SW6 is turned OFF, and the SW7 is switched to the side of the reference voltage input/output terminal 44. If the external reference voltage is not supplied to the reference voltage input/output terminal 44, the potentials at the point C and the point D are the GND potentials since the SW6 connected to the output of the interior reference voltage generating circuit 39 is in the OFF state. Therefore, the output of the amplifier circuit U9 is Low and the base potential of the transistor Q1 is low, so that the collector potential of the Q1 is High. In other words, the current direction detecting circuit 47 determines that the circuit is set to use the interior reference voltage, and leaves the SW6 turned ON and switches the SW7 to the side of the interior reference voltage generating circuit 39.

As shown by B of FIG. 16, the reference voltage output of the reference voltage generating circuit 39 is buffered by the buffer circuit U6 via the SW7, and is sent to the amplifier circuit (not shown) inside of the PDIC. Further, the reference voltage output is sent to the reference voltage input terminal of the RF amplifier at the rear stage of the PDIC from the reference voltage input/output terminal 44 via the SW6 and the resistance R5.

If the resistance R5 is too large, the reference voltage drops. For this reason, the resistance R5 can be determined in consideration of a relation with the gain of the amplifier circuit U9, or the dropped voltage of the resistance R5 can be compensated by changing the buffer circuit U6 into the amplifier circuit. According to the embodiment shown in FIG. 16, the switch circuit by the amplifier circuit U9 and the transistor Q2 is used, but a comparator circuit may be used.

According to the embodiment of the present invention, a function is provided, whereby any of switch of the reference voltage to be supplied to the PDIC into the inside and that into the outside can be selected by the means such as the reference voltage input/output terminal, the reference voltage switch terminal, and the automatic switch circuit. However, as other means, two kinds of aluminum wiring masks are provided when the PDIC is manufactured, and in a system of a so-called aluminum option (or a metal option), it is also possible to switch the reference voltage to the inside and to the outside. In this case, the switch circuit or the like is not required.

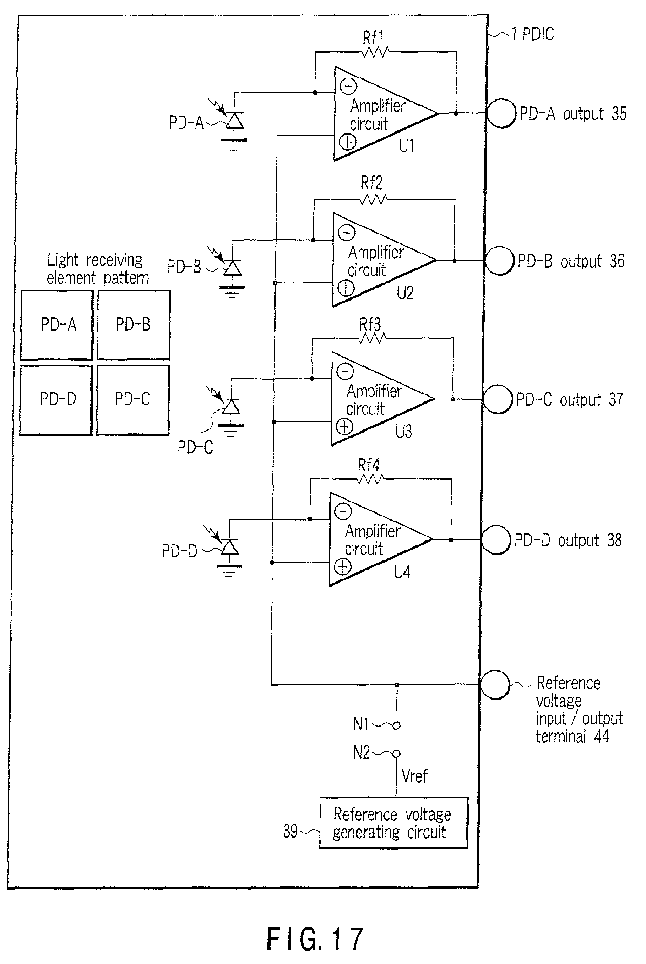

For example, as shown in FIG. 17, two kinds of PDIC are manufactured by using the aluminum wiring mask having no wiring pattern connecting a node N1 and a node N2 and the aluminum wiring mask having the wiring pattern connecting the node N1 and the node N2. In response to the configuration of the RF amplifier 21 at the rear stage, one of two kinds of PDIC is used. For example, if the RF amplifier 21 is configured so as to output the reference voltage, the PDIC manufactured by using the aluminum wiring mask having no wiring pattern connecting the node N1 and the node N2 is used as shown in FIG. 17. In addition, the SW3 and the SW4 shown in FIG. 9 may be switched by an aluminum option. Thus, by employing the system of the aluminum option, the reference voltage switch terminal 42 is not required, which leads to miniaturization of a package. Further, by employing the system of the aluminum option, it is possible to realize the reduction of the circuit design of the PDIC and the manufacturing cost thereof. A user of the PDIC should determine whether the switching system due to the above-described circuit or the system for switching by the aluminum option is selected.

Next, the PDIC in response to plural kinds of wavelengths will be described.

In recent years, three wavelengths to be used in a CD (a compact disk player), an LD (a laser disk player), a DVD (a digital Versatile Disk), and an HD-DVD using a blue laser or the like, and a PUH (an optical pickup unit) such as a drive, a recorder, and a player should be compatible with each other. For this reason, the PUH has to mount the PDIC compatible with each of three wavelengths thereon.

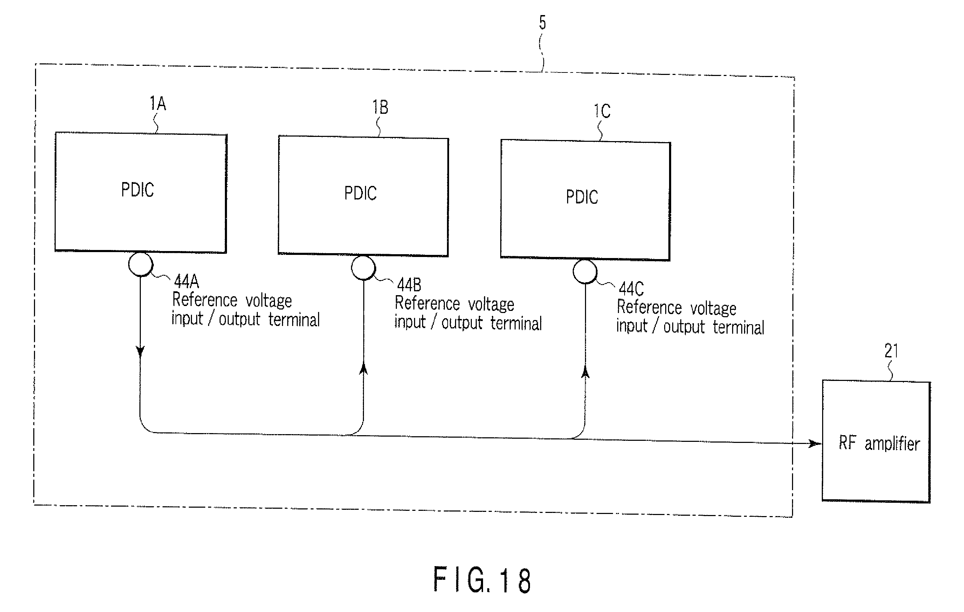

FIG. 18 is a schematic diagram showing an embodiment in the case where the PDIC corresponding to three wavelengths is mounted in the PUH.

In FIG. 18, reference symbols 1A, 1B, and 1C receive the lights of different wavelengths, respectively. In the case of this embodiment, for example, the PDIC of 1A is set for a blue laser, and the reference voltage is set at a system of output. The PDIC of 1B is set for a red laser, and the reference voltage is set at a system of input. The PDIC of 1C is set for an infrared laser, and the reference voltage is set at the system of input. As the operation, the reference voltage is outputted from the reference voltage input/output terminal 44 of the PDIC 1A, and its output is transmitted to the PDIC 1B, the PDIC 1C, and the reference voltage input terminal (not shown) of the RF amplifier 21 at the rear stage. The temperature and its temperature property may be approximately the same on the PUH. Accordingly, the PDIC 1A outputting the reference voltage and other PDIC 1B and PDIC 1C have the same temperature drift tendencies, so that the DC component of a signal including the optical detection signal can be transmitted with a high accuracy.

Next, the PDIC having many (six or mote) light receiving cells (the photo diodes) will be described below.

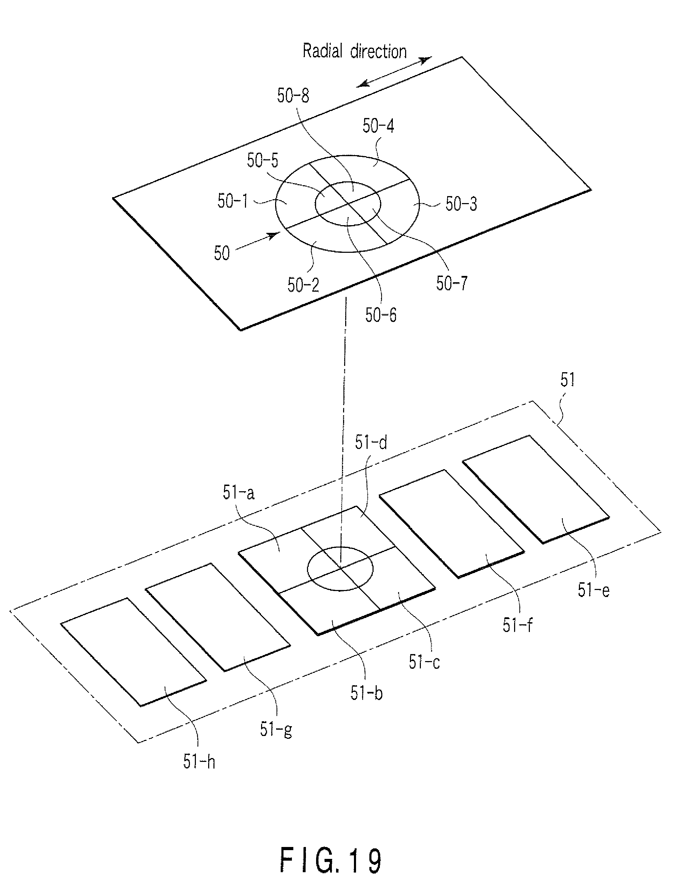

FIG. 19 shows an example of a hologram (a diffraction grating) 50 incorporated in a light path of the optical pickup head 5 and a pattern of a light receiving element for receiving the light divided by the hologram.

The light beam (the laser beam) divided by the hologram 50 is imaged on four light receiving cells 51-a to 51-d provided at the center part of a light receiving element 51, and four light receiving cells 51-e to 51-h separated in a radial direction (namely, an optical disk radial direction), respectively. A diffraction light diffracted by the all areas 50-1 to 50-8 of the hologram 50, respectively, is used for detecting a DPD (differential phase detection) system tracking error signal, which follows the DPD system. The diffraction light diffracted by the areas 50-1 to 50-4 is used for generating a PP (push pull) system tracking error signal following the PP system.

If the outputs of light receiving areas 51-a to 51-h are Pa to Ph, respectively, a tracking error signal PP in the PP system can be obtained from the following formula.

$$PP = (Pa + Pd) - (Pb + Pc)$$

In addition, a tracking error signal DPD in the DPD system can be obtained from the following formula.

$$DPD = pha\ (Pa + Pe + Pc + Pg) - pha\ (Pb + Pf + Pd + Ph)$$

Here, pha means that the phase of each output is obtained.

Thus, for the PDIC having many light receiving cells and having many corresponding IV converter circuits, the PDIC is particularly effective which is provided with a buffer circuit as shown in FIG. 14. Further, the tracking error signal in the DPD system can be generated by using at least six light receiving cells in the case of a system using a hologram as shown in FIG. 19.

As described above, according to the light receiving element circuit (PDIC) of the first embodiment of the invention, any of the input and output types of the reference voltage can be used as the RF amplifier at the rear stage. As a result, the RF amplifier of a low cost can be selected, and the embodiment has an extraordinary effect that there is no limit to the design of the circuit of the RF amplifier.

In addition, as a result of mounting the reference voltage generating circuit inside of the PDIC, it is possible to allow the change of the reference voltage due to the change of the peripheral temperature to follow the change of the DC component in the output signal of the PDIC due to the change of the peripheral temperature. Accordingly, it is possible to improve the temperature properties of the focus offset and the tracking offset.

Furthermore, as a result of mounting the reference voltage generating circuit inside of the PDIC, a voltage drop due to transmission loss on a transmission line, for example, a flexible substrate is reduced.

Moreover, when a plurality of PDIC are mounted on a pickup including the PDIC for an APC (Auto Power Control) to control a laser power and the PDIC for the data, the number of wirings on the substrate is remarkably decreased. It is demanded that the signal line for the reference voltage is common to all the PDICs for simple design. According to the present invention, the reference voltage is not particularly limited to input or output, and consequently, there is an advantage that such a case can be flexibly treated.

**Claims**

1. A light receiving element circuit configured by a light receiving element which photoelectrically converts an optical signal having an information signal and an amplifier circuit which amplifies the photoelectrically converted electric signal and outputs the signal, **characterized by** comprising:

   a reference voltage generating circuit (39) which generates a reference voltage of the amplifier circuit;
   a reference voltage output terminal (40) to output the reference voltage to the outside of the light receiving element circuit;
   a reference voltage input terminal (41) to input a reference voltage from the outside of the light receiving element circuit;
   a switch (SW1) which switches the reference voltage generated from the reference voltage generating circuit and the reference voltage inputted from the reference voltage input terminal; and
   a reference voltage switch terminal (42) to input a signal for controlling the switch.

2. The light receiving element circuit according to claim 1, **characterized in that** the light receiving element has at least six light receiving cells.

3. The light receiving element circuit according to claim 1, **characterized by** further comprising a plurality of light receiving elements which receive light beams of a plurality of wavelengths each having an information signal, and output electric signals corresponding to the information signals.

4.  A light receiving element circuit configured by a light receiving element which photoelectrically converts an optical signal having an information signal and an amplifier circuit which amplifies the photoelectrically converted electric signal and outputs the signal, **characterized by** comprising:

    a reference voltage generating circuit (39) which generates a reference voltage of the amplifier circuit;
    a reference voltage input/output terminal (44) to output the reference voltage generated from the reference voltage generating circuit to the outside of the light receiving element circuit and to input a reference voltage from the outside of the light receiving element circuit; and
    a selecting circuit which selects one of the reference voltage generated from the reference voltage generating circuit and the reference voltage inputted from the reference voltage input/output terminal, and supplies the selected reference voltage to the amplifier circuit.

5.  The light receiving element circuit according to claim 4, **characterized in that** the selecting circuit comprises:

    a reference voltage switch terminal (42) to input a signal for controlling input and output of the reference voltage; and
    a reference voltage switch circuit (43) which selects one of the reference voltage generated from the reference voltage generating circuit and the reference voltage inputted from the reference voltage input/output terminal in response to the signal from the reference voltage switch terminal, and supplies the selected reference voltage to the amplifier circuit.

6.  The light receiving element circuit according to claim 4, **characterized in that** the light receiving element has at least six light receiving cells.

7.  The light receiving element circuit according to claim 4, **characterized by** further comprising a plurality of light receiving elements which receive light beams of a plurality of wavelengths each having an information signal, and output electric signals corresponding to the information signals.

8.  A light receiving element circuit according to claim 4, **characterized in that** the selecting circuit comprises a reference voltage automatic switch circuit (46) which determines whether or not a reference voltage is inputted in the reference voltage input/output terminal from the outside of the light receiving element circuit; when the reference voltage is inputted in the reference voltage input/output terminal from the outside, supplies the reference voltage from the reference voltage input/output terminal to the amplifier circuit; and when the reference voltage is not inputted in the reference voltage input/output terminal from the outside, supplies the reference voltage generated from the reference voltage generating circuit to the amplifier circuit and the reference voltage input/output terminal.

9.  The light receiving element circuit according to claim 8, **characterized in that** the light receiving element has at least six light receiving cells.

10. The light receiving element circuit according to claim 8, **characterized by** further comprising a plurality of light receiving elements which receive light beams of a plurality of wavelengths each having an information signal, and output electric signals corresponding to the information signals.

11. A light receiving element circuit according to claim 4, **characterized in that** the selecting circuit comprises switches (N1, N2) which switch a reference voltage to be supplied to the amplifier circuit into one of the reference voltage generated from the reference voltage generating circuit and the reference voltage inputted from the reference voltage input/output terminal, the switch being configured by a switch of a metal option in a semiconductor manufacturing process.

12. The light receiving element circuit according to claim 11, **characterized in that** the light receiving element has at least six light receiving cells.

13. The light receiving element circuit according to claim 11, **characterized by** further comprising a plurality of light receiving elements which receive light beams of a plurality of wavelengths each having an information signal, and output electric signal corresponding to the information signal.

**14.** An optical disk device, **characterized by** comprising:

an optical pickup (5) having a light receiving element circuit configured by a light receiving element which photoelectrically converts an optical signal having an information signal and an amplifier circuit which amplifies the photoelectrically converted electric signal and outputs the signal, the optical pickup irradiating a light beam to an optical disk, receiving its reflection light by the light receiving element, and providing a light detection signal;
a focusing control circuit (22) which generates a focus control signal for controlling the focus of the light beam emitted from the optical pickup on a basis of the light detection signal;
a tracking control circuit (23) which generates a tracking control signal for controlling the tracking of the light beam emitted from the optical pick up on a basis of the light detection signal; and
a data reproducing circuit (27) which reproduces data recorded in the optical disk from the light detection signal, the light receiving element circuit (1) comprising:

a reference voltage generating circuit (39) which generates a reference voltage of the amplifier circuit;
a reference voltage output terminal (40) to output the reference voltage to the outside of the light receiving element circuit;
a reference voltage input terminal (41) to input a reference voltage from the outside of the light receiving element circuit;
a switch (SW1) which switches the reference voltage generated from the reference voltage generating circuit and the reference voltage inputted from the reference voltage input terminal; and
a reference voltage switch terminal (42) to input a signal for controlling the switch.

**15.** An optical disk device, **characterized by** comprising:

an optical pickup (5) having a light receiving element circuit configured by a light receiving element which photoelectrically converts an optical signal having an information signal and an amplifier circuit which amplifies the photoelectrically converted electric signal and outputs the signal, the optical pickup irradiating a light beam to an optical disk, receiving its reflection light by the light receiving element, and providing a light detection signal;
a focusing control circuit (22) which generates a focus control signal for controlling the focus of the light beam emitted from the optical pickup on the basis of the light detection signal;
a tracking control circuit (23) which generates a tracking control signal for controlling the tracking of the light beam emitted from the optical pick up on the basis of the light detection signal; and
a data reproducing circuit (27) which reproduces data recorded in the optical disk from the light detection signal, the light receiving element circuit (1) comprising:

a reference voltage generating circuit (39) which generates a reference voltage of the amplifier circuit;
a reference voltage input/output terminal (44) to output the reference voltage generated from the reference voltage generating circuit to the outside of the light receiving element circuit and to input a reference voltage from the outside of the light receiving element circuit; and
a selecting circuit which selects one of the reference voltage generated from the reference voltage generating circuit and the reference voltage inputted from the reference voltage input/output terminal, and supplies the selected reference voltage to the amplifier circuit.

**16.** The optical disk device according to claim 15, **characterized in that** the selecting circuit comprises:

a reference voltage switch terminal (42) to input a signal for controlling input and output of the reference voltage; and
a reference voltage switch circuit (43) which selects one of the reference voltage generated from the reference voltage generating circuit and the reference voltage inputted from the reference voltage input/output terminal in response to the signal from the reference voltage switch terminal, and supplies the selected reference voltage to the amplifier circuit.

**17.** The optical disk device according to claim 15, **characterized in that** the selecting circuit comprises a reference voltage automatic switch circuit (46) which determines whether or not a reference voltage is inputted in the reference voltage input/output terminal from the outside of the light receiving element circuit; when the reference voltage is inputted in the reference voltage input/output terminal from the outside, supplies the reference voltage from the reference voltage input/output terminal to the amplifier circuit; and when the reference voltage is not inputted in the reference voltage input/output terminal from the outside, supplies the reference voltage generated from the reference voltage generating circuit to the amplifier circuit and the reference voltage input/output terminal.

**18.** The optical disk device according to claim 15, **characterized in that** the selecting circuit comprises switches (N1, N2) which switch a reference voltage to be supplied to the amplifier circuit into one of the reference voltage generated from the reference voltage generating circuit and the reference voltage inputted from the reference voltage input/output terminal, the switch being configured by a switch of a metal option in a semiconductor manufacturing process.

FIG. 1

F I G. 2

Light receiving element pattern

| PD-A | PD-B |
|------|------|
| PD-D | PD-C |

FIG. 3A

Light receiving element pattern

| PD-A | PD-B |
|------|------|
| PD-D | PD-C |

FIG. 3B

Light receiving element pattern

| PD-A | PD-B |
|------|------|
| PD-D | PD-C |

FIG. 3C

EP 1 746 588 A2

Light receiving
element pattern

F I G. 4 A

Light receiving
element pattern

F I G. 4 B

Light receiving
element pattern

F I G. 4 C

F I G. 5

FIG. 6

FIG. 7

FIG. 8

FIG. 9

FIG.10

1 PDIC

Amplifier circuit

U1

PD

Reference voltage automatic switch circuit

46

Signal output terminal 45

Reference voltage input / output terminal 44

FIG. 11

46

Reference voltage automatic switch circuit

Ⓑ

To amplifier circuit

Ⓐ

Ⓑ

Current direction detecting circuit

47

SW5

Reference voltage input / output terminal 44

Reference voltage generating circuit

39

FIG. 12

46

Reference voltage automatic switch circuit

Ⓑ ←

To amplifier circuit ←

Ⓐ ←

Buffer circuit

U6

Ⓑ →

SW5

Current direction detecting circuit

47

Reference voltage enerating circuit ~ 39

Reference voltage input / output terminal 44

F I G. 1 3

46

Reference voltage automatic switch circuit

Ⓑ ←

To amplifier circuit ←

Ⓐ ←

SW6

Ⓑ →

Buffer circuit

U6

SW7

Current direction detecting circuit

47

Reference voltage generating circuit ~ 39

Reference voltage input / output terminal 44

F I G. 1 4

FIG.15

FIG.16

FIG.17

FIG.18

Radial direction

50-8

50-4

50-5

50-1

50

50-2

50-6

50-7

50-3

51

51-d

51-a

51-b

51-c

51-f

51-e

51-g

51-h

# FIG.19

**REFERENCES CITED IN THE DESCRIPTION**

**Patent documents cited in the description**

• JP 3582932 B